# EUROPÄISCHE PATENTSCHRIFT

(11) **EP 2 099 582 B1**
(45) Veröffentlichungstag und Bekanntmachung des Hinweises auf die Patenterteilung: **07.06.2017**
(21) Anmeldenummer: 07846397.3
(22) Anmeldetag: 05.12.2007
(51) Int. Cl.: B22F 3/105, B22F 5/04, B23P 15/02, B23P 6/00, F01D 5/00

(54) **VORRICHTUNG UND VERFAHREN ZUR REPARATUR ODER HERSTELLUNG VON SCHAUFELSPITZEN VON SCHAUFELN EINER GASTURBINE, INSBESONDERE EINES FLUGTRIEBWERKS**
DEVICE AND METHOD FOR THE REPAIR OR PRODUCTION OF BLADE TIPS OF BLADES OF A GAS TURBINE, IN PARTICULAR OF AN AIRCRAFT ENGINE
DISPOSITIF ET PROCÉDÉ DE RÉPARATION OU DE FABRICATION DE POINTES D'AUBES D'UNE TURBINE À GAZ, NOTAMMENT D'UN MOTEUR D'AVION

(30) Priorität: 14.12.2006 DE 102006058949
(43) Veröffentlichungstag der Anmeldung: 16.09.2009
(73) Patentinhaber: MTU Aero Engines AG, 80995 München (DE); Inno-Shape Gmbh, 52074 Aachen (DE)
(72) Erfinder: RICHTER, Karl-Hermann, 85229 Markt Indersdorf (DE); HANRIEDER, Herbert, 85411 Hohenkammer (DE); ADER, Christoph, 81925 München (DE); OVER, Christoph, 52074 Aachen (DE)
(74) Vertreter: Lang, Christian
(86) Internationale Anmeldenummer: PCT/DE2007/002199
(87) Internationale Veröffentlichungsnummer: WO 2008/071165

(56) Entgegenhaltungen:
- WO-A2-01/87528
- DE-A1- 19 903 436
- US-A- 4 818 562
- US-A- 4 851 188
- US-A1- 2001 014 403

## Beschreibung

Die Erfindung betrifft ein Verfahren zur Reparatur oder Herstellung von Schaufelspitzen von Schaufeln einer Gasturbine, insbesondere eines Flugtriebwerks, sowie eine Vorrichtung für die Reparatur oder Herstellung von Schaufelspitzen von Schaufeln einer Gasturbine, insbesondere eines Flugtriebwerks.

Da Schaufeln von Flugtriebwerken, wie Turbinenschaufeln oder Verdichterschaufeln, recht teuer in ihrer Herstellung sind, werden derartige Schaufeln im Falle von Beschädigungen oder Verschleiß in aller Regel - sofern dies möglich ist - repariert. Es wird also eine beschädigte bzw. verschlissene Schaufel nicht stets gegen eine neue ausgetauscht, sondern nur wenn dies unabwendbar ist.

Die Reparatur von Schaufeln erfolgt heutzutage in aller Regel mittels des so genannten "Patchens". Dabei wird durch einen Schnitt ein Teil der Schaufel, in welchem sich ein beschädigter Abschnitt befindet, von der Schaufel entfernt. Dies betrifft häufig einen Abschnitt der die Schaufelspitze beinhaltet, da gerade im Bereich der Schaufelspitze häufig Beschädigungen oder Verschleiß auftreten. Das Patchen kann aber auch mittels standardisierter Schnitte erfolgen.

Anschließend wird an das abgetrennte Segment der Schaufel durch ein Formidentisches neues Segment ersetzt. Dies erfolgt in aller Regel so, dass das neue Segment - gegebenenfalls noch mit Übermaß - separat angefertigt und an die Restschaufel gefügt wird. Insbesondere in den Fällen, in denen das neue Segment ein Übermaß aufweist, findet anschließend eine Bearbeitung statt, mittels welcher die angestrebte Form erzeugt wird.

Dieses bekannte Verfahren zur Schaufelreparatur, das typischerweise manuell durchgeführt wird, ist mit verhältnismäßig großem Aufwand verbunden.
Aus anderen technischen Gebieten, also nicht aus dem Bereich der Schaufelreparaturen, sind im Übrigen so genannte generative Verfahren bekannt. Bei diesen generativen Verfahren wird aus Pulver ein Bauteil schichtweise aufgebaut, indem diese einzelnen Schichten jeweils unter thermischer Einwirkung in Kombination mit z.B. Strahlenenergie verfestigt werden. Zur Reduzierung des thermischen Gradientens in Kombination mit Rissausbildung kann eine 'allgemeiner Erwärmung einer (Pulver-)Schicht vorgesehen werden. Bei derartigen zusätzlichen Erwärmungen bzw. generativen Herstellungsverfahren existieren zwei Varianten.

Die eine Variante geht dahin, dass die Erwärmung beim schichtweisen generativen Aufbau über eine Heizplatte (elektrisch) erfolgt. Dies ist so, dass mittels einer Heizplatte das aufzubauende (metallische) Bauteil inklusive Ausgangsmaterial (Pulver) erwärmt wird, und zwar so, dass über dieses Bauteil (durch thermische Leitung) der Bereich, in dem die nächste Schicht aufgebaut werden soll, auf die Temperatur gebracht wird, die zum Schmelzen des Pulvers erforderlich ist.

Die zweite Variante ist so, dass der Arbeitsraum, in dem das generative Herstellungsverfahren ausgeführt wird, selbst ein Ofen ist. In anderen Worten wird also das Bauteil generativ in einem Ofen aufgebaut. Der Ofen erzeugt eine gleichmäßig (hohe) Temperatur, die erforderlich ist, um die entsprechende Schicht aufzubauen, und erwärmt dabei zwangsläufig das gesamte aufzubauende bzw. aufgebaute Bauteil.

Unter Fachleuten besteht derzeit Einigkeit dahingehend, dass sich derartige generative Herstellungsverfahren nur in sehr beschränktem Maße und für recht beschränkte Einsatzzwecke einsetzen lassen, dort aber dann erhebliche Vorteile haben.

So werden nach einhelliger Meinung der Fachkreise generative Herstellungsverfahren für solche Anwendungen als völlig ungeeignet erachtet, bei denen die Gefahr besteht, dass ein großflächiges Erhitzen des Bauteils bzw. des aufzubauenden Bauteils zu erheblichen Gefügeveränderungen und / oder Verzug und somit zu nennenswerten Fertigungsungenauigkeiten führt.

Ein typisches Gebiet der vorgenannten Art, also der Art, dass das generative Herstellungsverfahren als völlig ungeeignet für dieses Gebiet erachtet wird, ist das Gebiet der Reparatur von Schaufeln für Turbinen oder Verdichter von Flugtriebwerken.

In diesem Fachgebiet kommt im Übrigen erschwerend hinzu, dass Schaufeln, die im Vergleich zueinander ungleichmässig verzogen sind und in dem gleichen Rotor zum Einsatz kommen, zu erheblichen Drehungleichförmigkeiten des Rotors führen können. Dieses würde nicht nur zu einem deutlich gestiegenen Kerosinverbrauch führen, sondern könnte darüber hinaus gegebenenfalls sogar sicherheitskritische Situationen bewirken.

Die Dokumente DE 19903436 A1, US 4,851,188, US 2001/0014403 A1 und US 4,818,562 beschreiben Verfahren und Vorrichtungen zum Herstellen von dreidimensionalen Formkörpern mittels Laserstrahlauftragsschweißen oder mittels Aufschmelzen von aufgebrachten Pulverpartikeln mittels induktivem Heizen. Die US 4,851,188 bildet den nächstliegenden Stand der Technik gegenüber dem Gegenstand der unabhängigen Ansprüche 1 und 3. Sie offenbart die Merkmale der Oberbegriffe dieser Ansprüche.

Vor diesem Hintergrund liegt der Erfindung nun die Aufgabe zugrunde, eine einfache Möglichkeit der Schaufel- bzw. Schaufelspitzenreparatur von Schaufeln für Turbinen oder Verdichter von Flugtriebwerken zu schaffen.

Zur Lösung wird eine Vorrichtung zur Reparatur von Schaufeln, insbesondere von Schaufelspitzen, einer Gasturbine gemäß Anspruch 1 vorgeschlagen. Ein erfindungsgemäßes Verfahren ist Gegenstand des Anspruchs 3. Bevorzugte Weiterbildungen sind Gegenstand der Unteransprüche.

Es wird also insbesondere eine Vorrichtung für die Herstellung oder Reparatur einer Gasturbinenschaufel, insbesondere Verdichterschaufel oder Turbinenschaufel, vorgeschlagen. In vorteilhafter Ausgestaltung ist diese Gasturbinenschaufel bzw. Verdichterschaufel bzw. Turbinenschaufel Bestandteil eines Flugtriebwerks. Die Vorrichtung weist eine Haltevorrichtung zum Halten der Gasturbinenschaufel bzw. eines Schaufelblatts der Gasturbinenschaufel auf, sowie eine Absenkeinrichtung für das Absenken der Schaufel bzw. des Schaufelblatts, ein Behältnis für die Aufnahme von Pulver und/oder für die Aufnahme der Schaufel bzw. des Schaufelblatts sowie eine Heizvorrichtung und eine Strahlungsquelle.

Die Heizvorrichtung weist eine Induktionsspule auf bzw. ist als Induktionsspule ausgebildet.

Die Strahlungsquelle kann beispielsweise ein Laser oder eine Elektronenstrahlquelle sein. In vorteilhafter Gestaltung ist die Haltevorrichtung mit der Absenkeinrichtung gekoppelt bzw. an oder auf der Absenkeinrichtung angeordnet bzw. fixiert.

Gemäß eine vorteilhaften Gestaltung ist vorgesehen, dass die oder eine erfindungsgemäße Vorrichtung zur Ausführung des oder eines erfindungsgemäßen Verfahrens verwendet wird.

Vorzugsweise weist die Vorrichtung eine Steuerungsvorrichtung für das Steuern einer automatisierten Herstellung oder Reparatur der Schaufeln für Gasturbinen auf. Es kann vorgesehen sein, dass mittels dieser Steuerungsvorrichtung ein erfindungsgemäßes Verfahrens gesteuert wird, und zwar insbesondere automatisch gesteuert wird.

In vorteilhafter Gestaltung ist die Induktionsspule in dem Behältnis, wobei von der Spule Leitungen für eine Spannungsversorgung aus dem Behältnis herausgeführt sind. Die Spule ist vorzugsweise fest gegenüber und / oder am Behältnis angeordnet. In besonders vorteilhafter Ausgestaltung ist im Behältnis eine Schutzgasatmosphäre oder ein Vakuum, und zwar insbesondere im oberen Bereich des Behältnisses.

Ferner wird insbesondere ein Verfahren zur Herstellung oder Reparatur von Schaufeln für Gasturbinen vorgeschlagen. Danach ist vorgesehen, dass zumindest ein Abschnitt der Schaufel bzw. des Schaufelblattes dieser Schaufel schichtweise generativ erzeugt wird. Insbesondere zu diesem Zweck wird zunächst ein Grundkörper einer Schaufel aufgebracht und dieser Grundkörper in einer Haltevorrichtung fixiert, insbesondere eingespannt. Der Grundkörper kann beispielsweise eine bereits - beispielsweise generativ oder auf andere Weise - teilweise erzeugte Schaufel bzw. Schaufelblatt sein. Es kann auch vorgesehen sein, dass der Grundkörper - insbesondere Im Falle einer Reparatur - einer um einen abgeschnittenen Teil reduzierten Schaufel entspricht. Es kann vorgehen sein, dass der Grundkörper eine bereits teilweise hergestellte oder wiederhergestellte Schaufel ist, die zumindest abschnittsweise bereits mittels eines erfindungsgemäßen Verfahrens hergestellt ist. Gemäß dem erfindungsgemäßen Verfahren ist ferner vorgesehen, dass eine Pulverschicht auf einen vorbestimmten Abschnitt des Grundkörpers aufgebracht wird. Ferner wird der Grundkörper bzw. ein Bereich des Grundkörpers lokal begrenzt induktiv auf eine Temperatur erwärmt, die größer als eine vorbestimmte Mindesttemperatur ist. Beispielsweise kann vorgesehen sein, dass der Grundkörper bzw. ein Bereich des Grundkörpers auf eine Temperatur induktiv erwärmt wird, die größer als 500°C, bevorzugt größer als 700°C, bevorzugt größer als 850°C, bevorzugt größer als 900°C, bevorzugt größer als 950°C ist. Beispielsweise kann vorgesehen sein, dass der Grundkörper bzw. ein Bereich des Grundkörpers auf ca. 1000°C oder mehr erwärmt wird. Ferner wird gemäß dem erfindungsgemäßen Verfahren der Grundkörper bzw. die angesprochene Pulverschicht bestrahlt bzw. wird der Bereich mit der den vorbestimmten Abschnitt des Grundkörpers bedeckenden Pulverschicht bzw. diesem Abschnitt zum lokalen Verschmelzen der Pulverschicht mit dem Grundkörper bestrahlt.

Im Folgenden soll nun anhand der Figur ein Ausführungsbeispiel der Erfindung näher erläutert werden, wobei anzumerken ist, dass auch andere Ausführungsbeispiele unter die Erfindung fallen sollen, so dass die Erfindung nicht nur auf das Ausführungsbeispiel gemäß der Figur beschränkt ist. Dabei zeigt:

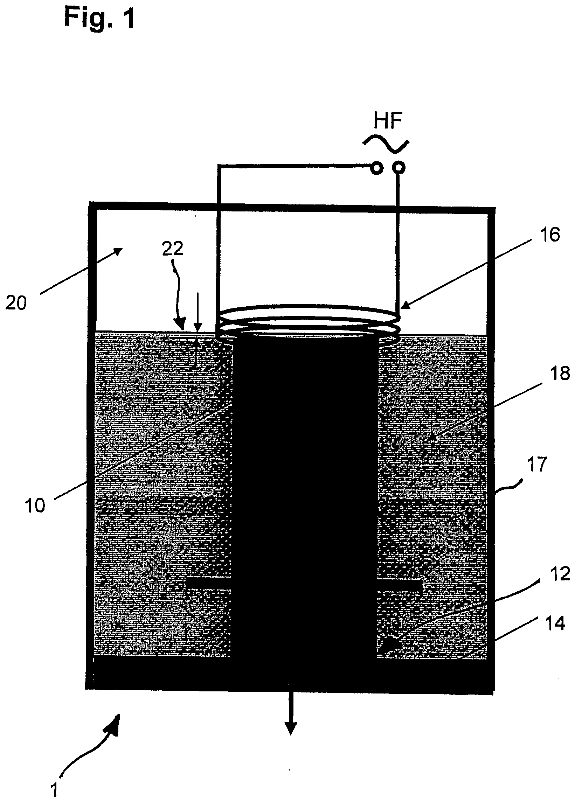

- Fig. 1: eine beispielhafte erfindungsgemäße Vorrichtung in schematischer Ansicht, wobei mittels dieser Vorrichtung insbesondere ein erfindungsgemäßes Verfahren durchgeführt werden kann.

Fig. 1 zeigt eine beispielhafte erfindungsgemäße Vorrichtung 1 zur Herstellung oder Reparatur von Schaufeln 10 bzw. von Schaufelblättern 10 bzw. von Schaufelspitzen für Turbinen oder Verdichter von Flugtriebwerken.

Die Vorrichtung 1 weist eine Haltevorrichtung 12 für den Grundkörper bzw. für die Schaufel 10 auf. Die Schaufel 10 wird - insbesondere bei der Durchführung eines beispielhaften erfindungsgemäßen Verfahrens - in der Haltevorrichtung 12 gehalten. Die Haltevorrichtung 12 kann beispielsweise eine Klemmvorrichtung sein. Es kann also insbesondere vorgesehen sein, dass das Bauteil 10 bzw. die Schaufel 10 in der Haltevorrichtung 12 eingespannt wird.

Die in Fig. 1 gezeigte Vorrichtung weist ferner eine absenkbare Einheit bzw. Absenkeinrichtung 14 auf. Diese Absenkeinrichtung 14 dient dazu, dass das Bauteil bzw. die Schaufel 10 für den schichtweisen Aufbau abgesenkt werden kann, und zwar insbesondere gestuft um jeweils ein der jeweiligen Schichtdicke 22 der im Rahmen des generativen Aufbaus zu erzeugenden Schichten entsprechendes Maß.

Es kann vorgesehen sein, dass die Haltevorrichtung 12 mit der Absenkeinrichtung 14 eine gemeinsame Einheit bildet bzw. dass die Haltevorrichtung 12 auf der Absenkeinrichtung 14 montiert ist. Es ist insbesondere vorgesehen, dass die Haltevorrichtung 12 derart auf der absenkbaren Einheit bzw. Absenkeinrichtung 14 ist, dass eine gleichmäßig dicke Pulverschicht aufgetragen werden kann, und zwar insbesondere um das Bauteil bzw. die Schaufel 10 bzw. das Schaufelblatt aufzubauen.

Die Vorrichtung 1 weist ferner eine Heizvorrichtung 16 auf, die als HF-Spule bzw. als Induktionsspule 16 gestaltet ist. Der Vorteil einer solchen HF-Spule bzw. Induktionsspule 16 besteht darin, dass mittels dieser eine im wesentlichen begrenzte Erhitzung bzw. Erwärmung bewirkt werden kann. Hiermit kann das Bauteil bzw. die Schaufel 10 im Bereich der zu erzeugenden Pulverschicht bzw. die Pulverschicht induktiv erwärmt werden. Es kann vorgesehen sein, dass die Spule 16 entweder oberhalb der Pulverschicht oder im Pulver 18 angeordnet ist. Es ist insbesondere vorgesehen, dass das Pulver selbst dabei nicht aufgeheizt wird bzw. dass die Induktionsspule 16 das Pulver nicht aufgeheizt.

Es kann weiterhin sein, dass die Induktionsspule 16 indirekt einen nicht in Fig. 1 dargestellten Suszeptor erhitzt, der wiederum die Schaufelspitze gleichmäßig erhitzt.

Das - insbesondere lokal im Wesentlichen begrenzte - Erwärmen des Grundkörpers bzw. Bauteils 10 bzw. der Schaufel 10 bzw. des Schaufelblatts 10 kann dabei innerhalb von wenigen Sekunden auf beispielsweise 1000°C oder 1080°C bewirkt werden. Durch Strahlenenergie, z.B. durch Laserstrahlen oder Elektronenstrahlen, kann dann ein lokales Verschmelzen der Pulverschicht mit dem Bauteil bzw. der Schaufel 10 erfolgen.

Zu diesem Zweck kann eine in Fig. 1 nicht dargestellte Strahlenquelle, wie Laser- oder Elektronenstrahlquelle vorgesehen sein.

Nach dem Erzeugen einer Schicht in der vorgenannten Weise kann das Bauteil mittels der Absenkeinrichtung 14 (insbesondere um eine Schichtdicke) abgesenkt werden, wobei anschließend erneut Pulver 18 aufgetragen, induktiv erhitzt und durch Strahlenenergie verschmolzen wird. Dieser Vorgang kann sich so lange wiederholen, bis die angestrebte (End-)Geometrie erreicht ist.

Anzumerken ist, dass die Vorrichtung 1 ein Behältnis 17 aufweist, in welcher - zumindest auch - Pulver 18 eingebracht ist, das auch zum Aufbau der Schaufel 10 bzw. des Bauteils verwendet wird.

Im oberen Bereich kann in diesem Behältnis 17 eine Schutzgasatmosphäre 20 oder ein Vakuum 20 gegeben sein. Dabei ist insbesondere in vorteilhafter Ausgestaltung vorgesehen, dass die Spule 16 im Übergangsbereich von der Schutzgasatmosphäre bzw. dem Vakuum zu dem Pulver 18 vorgesehen ist.

Die Gestaltung gemäß dem Ausführungsbeispiel weist den Vorteil auf, dass das Erwärmen gezielt an der Stelle erfolgen kann, an der die entsprechende Wärme benötigt wird, und nicht über die gesamte Schaufel 10, etwa vom Schaufelfuß her, diese Schaufel 10 erwärmt wird, so dass es zu Verspannungen und / oder Verzug und / oder Gefügeänderungen kommen kann (insbesondere kann z.B. Verminderung der LCF-Festigkeit am Schaufelfuß ein nicht erwünschter Effekt sein).

Durch die Verknüpfung eines generativen Verfahrens mit einer Erwärmungseinrichtung, die als HF-Spule bzw. als Induktionsspule 16 ausgebildet ist, kann gemäß dem Ausführungsbeispiel eine einfache Vorrichtung für die Reparatur einer Schaufel bzw. eines Schaufelblatts 10 einer Turbine bzw. eines Verdichters eines Gastriebswerks geschaffen werden. Diese Gestaltung lässt sich sogar dahin ausbauen, dass die Schaufeln 10 automatisiert hergestellt werden können. Die Gefahr des Verzugs der Schaufel 10 bzw. von Fertigungsungenauigkeiten bzw. von Gefügeschäden ist gegenüber bekannten Gestaltungen deutlich vermindert.

Die Schichtdicke 22 kann beispielsweise zwischen 10 µm und 200 µm, bevorzugt zwischen 20 µm und 100 µm, besonders bevorzugt ca. 50 µm oder ca. 30 µm sein.

Es kann vorgesehen sein, dass der Grundkörper durch die Induktionsspule auf über 1000°C erhitzt wird, so dass (zwischen Bauteil 10 und Schicht)keine Rissbildung erwartet wird. Dabei bleibt die Umgebung kalt, so dass keine Beeinträchtigung der Anlage oder des Bauteils entsteht.

Es kann vorgesehen sein, dass der Grundkörper und / oder die generativ erzeugten Schichten aus hochschmelzendem (einkristallinen) Werkstoff sind. Es ist insbesondere vorgesehen dass ein Tip-Repair, insbesondere bei hochschmelzenden (einkristallinen) Werkstoffen des Grundkörpers und / oder der Schichten, automatisiert erfolgt, was nach dem Stand der Technik - so weit die Anmelderin informiert ist - nicht möglich ist.

Wie insbesondere das Ausführungsbeispiel zeigt, lassen sich hochschmelzende Werkstoffe verarbeiten bzw. ein automatisierter Tip-Repair durchführen.

## Patentansprüche

1. Vorrichtung für die Herstellung oder Reparatur einer Schaufel (10) für eine Gasturbinen, wobei diese Vorrichtung (1) aufweist:
- eine Haltevorrichtung (12) zum Halten einer Schaufel (10) bzw. eines Schaufelblatts einer Schaufel (10);
- eine Absenkeinrichtung (14) für das Absenken der Schaufel (10) bzw. des Schaufelblatts (10);
- ein Behältnis (17) für die Aufnahme von Pulver (18) und für die Aufnahme der Schaufel (10) bzw. des Schaufelblatts (10);
- eine Heizvorrichtung (16); und
- eine Laser- oder Elektronenstrahlquelle;
**dadurch gekennzeichnet, dass**
die Heizvorrichtung (16) als Induktionsspule (16) zur lokal begrenzten, direkten induktiven Heizung der Schaufel bzw. des Schaufelblatts und derart ausgebildet und in dem Behältnis (17) angeordnet ist, dass die Schaufel bzv. das Schaufelblatt im Bereich einer zu erzeugenden Pulverschicht bzw. einer Pulverschicht induktiv erwärmt wird.

2. Vorrichtung nach Anspruch 1, **dadurch gekennzeichnet, dass** eine die Vorrichtung (1) eine Steuerungsvorrichtung für das Steuern einer automatisierten Herstellung oder Reparatur der Schaufeln (10) für Gasturbinen aufweist.

3. Verfahren zur Herstellung oder Reparatur von Schaufeln (10) für Gasturbinen, welches Verfahren derart gestaltet ist, dass zumindest ein Abschnitt der Schaufel (10) bzw. des Schaufelblattes dieser Schaufel (10) schichtweise generativ erzeugt wird, wobei dieses Verfahren umfasst:
- Aufbringen eines Grundkörpers einer Schaufel (10) und Fixieren, insbesondere Einspannen, dieses Grundkörpers in einer Haltevorrichtung (12);
- Aufbringen einer Pulverschicht auf einen vorbestimmten Abschnitt des Grundkörpers in einem Pulver (18) enthaltenden Behältnis (17);
- Bestrahlen im Bereich der den vorbestimmten Abschnitt des Grundkörpers bedeckenden Pulverschicht zum lokalen Verschmelzen der Pulverschicht mit dem Grundkörper mit Elektronen- oder Laserstrahlen, **gekennzeichnet durch** ein
- lokal begrenztes, direktes induktives Erwärmen des Grundkörpers bzw. eines Bereichs des Grundkörpers auf eine Temperatur, die größer als eine vorbestimmte Mindesttemperatur ist, mittels einer Induktionsspule (16), welche derart ausgebildet und in dem Behältnis (17) angeordnet ist, dass der Grundkörper im Bereich der Pulverschicht induktiv erwärmt wird.

4. Verfahren nach Anspruch 3, **dadurch gekennzeichnet, dass** der Grundkörper und/ oder die Haltevorrichtung (12) nach dem Bestrahlen abgesenkt wird.

5. Verfahren nach Anspruch 4, **dadurch gekennzeichnet, dass** nach dem Absenken des Grundkörpers und/oder der Halteeinrichtung (12) erneut Pulver (18) auf den Grundkörper bzw. auf die an diesem zuvor zum Aufbau der Schaufel (10) bzw. des Schaufelblatts (10) mittels Pulver (18) erzeugte Schicht aufgebracht wird.

6. Verfahren nach Anspruch 5, **dadurch gekennzeichnet, dass** der Grundkörper bzw. die bereits auf diesem zuvor zum Aufbau der Schaufel (10) bzw. des Schaufelblatts (10) mittels Pulver (18) erzeugte Schicht lokal begrenzt, induktiv auf eine Temperatur erwärmt wird, die grösser als eine vorbestimmte Mindesttemperatur ist, und dass im Bereich der den Grundkörper bzw. die zuvor erzeugte Schicht bedeckenden weiteren Pulverschicht zum lokalen Verschmelzen der weiteren Pulverschicht mit dem Grundkörper bzw. der zuvor erzeugten Schicht bestrahlt wird.

## Claims

1. Device for the production or repair of a blade (10) for a gas turbine, said device (1) comprising:
- a holding device (12) for holding a blade (10) or an aerofoil of a blade (10);
- a lowering mechanism (14) for lowering the blade (10) or the aerofoil (10);
- a container (17) for receiving powder (18) and for receiving the blade (10) or the aerofoil (10);
- a heating device (16); and
- a laser or electron beam source,
**characterised in that**
the heating device (16) is formed as an induction coil (16) for localized, direct inductive heating of the blade or of the aerofoil and is configured and arranged in the container (17) in such a way that the blade or the aerofoil is inductively heated in the region of a powder layer to be generated or of a powder layer.

2. Device according to claim 1,
**characterised in that**
the device has a control device (1) for controlling automated production or repair of the blades (10) for gas turbines.

3. Method for the production or repair of blades (10) for gas turbines, the method being designed in such a way that at least a portion of the blade (10) or of the aerofoil of this blade (10) is generated layer by layer, said method comprising:
- applying a base body of a blade (10) and fixing, especially clamping, the base body in a holding device (12);
- applying a powder layer to a predetermined portion of the base body in a container (17) containing powder (18);
- irradiating in the region of the powder layer covering the predetermined portion of the base body to locally fuse the powder layer with the base body by means of electron beams or laser beams, **characterised by** locally limited direct inductive heating of the base body or of a region of the base body to a temperature which is greater than a preset minimum temperature, by means of an induction coil (16) which is configured and arranged in the container (17) in such a way that the base body is inductively heated in the region of the powder layer.

4. Method according to claim 3,
**characterised in that**
the base body and/or the holding device (12) is lowered after the irradiation.

5. Method according to claim 4,
**characterised in that**
after the base body and/or the holding device (12) have been lowered, powder (18) is again applied to the base body or to the layer generated previously thereon to build up the blade (10) or the aerofoil (10) by means of powder (18).

6. Method according to claim 5,
**characterised in that**
the base body or the layer generated previously thereon for building up the blade (10) or the aerofoil (10) by means of powder (18) is heated using locally limited, inductive heating to a temperature that is greater than a preset minimum temperature, and that the region of the further powder layer covering the base body or the previously generated layer is irradiated to locally fuse the further powder layer with the base body or with the previously generated layer.

## Revendications

1. Dispositif pour la fabrication ou la réparation d'une aube (10) pour une turbine à gaz, cependant que ce dispositif (1) présente :
- un dispositif de retenue (12) pour retenir une aube (10) ou une pale d'une aube (10) ;
- un dispositif d'abaissement (14) pour l'abaissement de l'aube (10) ou de la pale (10) ;
- un contenant (17) pour le logement de poudre (18) et pour le logement de l'aube (10) ou de la pale (10) ;
- un dispositif de chauffage (16) et
- une source de faisceaux laser ou une source de faisceaux électroniques, **caractérisé en ce que** le dispositif de chauffage (16) est configuré en tant que bobine d'induction (16) pour le chauffage inductif direct, limité localement, de l'aube ou de la pale et est configuré et placé de telle manière dans le contenant (17) de telle manière que l'aube ou la pale est réchauffée par induction dans la zone d'une couche de poudre à fabriquer ou d'une couche de poudre.

2. Dispositif selon la revendication 1, **caractérisé en ce que** le dispositif (1) présente un dispositif de commande pour la commande d'une fabrication automatisée ou d'une réparation des aubes (10) pour des turbines à gaz.

3. Procédé pour la fabrication ou la réparation d'aubes (10) pour des turbines à gaz, procédé qui est conçu de telle manière qu'au moins une section de l'aube (10) ou de la pale de cette aube (10) est produite de façon générative couche par couche, cependant que ce procédé comprend :
- l'application d'un corps de base d'une aube (10) et fixation, en particulier serrage, de ce corps de base dans un dispositif de retenue (12) ;
- l'application d'une couche de poudre sur une section prédéterminée du corps de base dans un contenant (17) qui contient de la poudre (18) ;
- l'irradiation avec des faisceaux d'électrons ou laser dans la zone de la couche de poudre qui recouvre la section prédéterminée du corps de base pour faire fondre localement la couche de poudre avec le corps de base,
**caractérisé par** un réchauffement inductif direct, limité localement, du corps de base ou d'une zone du corps de base à une température qui est supérieure à une température minimale prédéterminée, au moyen d'une bobine d'induction (16) qui est configurée et placée dans le contenant de telle marnière que le corps de base est réchauffé de manière inductive dans la zone de la couche de poudre.

4. Procédé selon la revendication 3, **caractérisé en ce que** le corps de base et/ou le dispositif de retenue (12) est abaissé après l'irradiation.

5. Procédé selon la revendication 4, **caractérisé en ce qu'**après l'abaissement du corps de base et/ou du dispositif de retenue (12) de la poudre (18) est appliquée à nouveau sur le corps de base ou sur la couche produite sur celui-ci auparavant pour constituer l'aube (10) ou la pale (10) au moyen de poudre (18).

6. Procédé selon la revendication 5, **caractérisé en ce que** le corps de base ou la couche produite déjà sur celui-ci auparavant pour constituer l'aube (10) ou la pale (10) au moyen de poudre (18) est réchauffée par induction de manière limitée localement à une température qui est supérieure à une température minimale prédéterminée et qu'il y a irradiation dans la zone de l'autre couche de poudre qui recouvre le corps de base ou la couche produite auparavant pour faire fondre localement l'autre couche de poudre avec le corps de base ou la couche produite auparavant.
